# FASCICULE DE BREVET EUROPEEN

(11) **EP 2 512 826 B1**
(45) Date de publication et mention de la délivrance du brevet: **08.06.2016**
(21) Numéro de dépôt: 10793220.4
(22) Date de dépôt: 14.12.2010
(51) Int. Cl.: B60C 1/00, C08K 3/24, C08K 3/00, C08K 7/02, C08L 9/00, C08K 5/00, C08L 21/00, C08L 7/00

(54) **PNEUMATIQUE HIVER A ADHERENCE SUR GLACE AMELIOREE**
WINTERREIFEN MIT VERBESSERTER GRIFFIGKEIT AUF EIS
WINTER TYRE WITH IMPROVED GRIP ON ICE

(30) Priorité: 18.12.2009 FR 0959169
(43) Date de publication de la demande: 24.10.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: MAESAKA, Masayuki, Gunma 373-8668 (JP); PAGANO, Salvatore, Tokyo 102-8176 (JP)
(74) Mandataire: Ribière, Joel
(86) Numéro de dépôt international: PCT/EP2010/069625
(87) Numéro de publication internationale: WO 2011/073188

(56) Documents cités:
- EP-A1- 0 896 981
- EP-A1- 1 621 578
- EP-A2- 1 561 605
- WO-A1-99/41210
- DATABASE WPI Week 199203 Thomson Scientific, London, GB; AN 1992-019218 XP002591804, -& JP 3 266705 A (YOKOHAMA RUBBER CO LTD) 27 novembre 1991 (1991-11-27)
- DATABASE WPI Week 200874 Thomson Scientific, London, GB; AN 2008-M54554 XP002591805, & JP 2008 222845 A (YOKOHAMA RUBBER CO LTD) 25 septembre 2008 (2008-09-25)

## Description

### 1. DOMAINE DE L'INVENTION

L'invention est relative aux compositions caoutchouteuses utilisées comme bandes de roulement de pneumatiques pour véhicules, en particulier de pneumatiques « hiver » aptes à rouler sur des sols recouverts de glace ou verglas sans être pourvus de clous (aussi appelés pneumatiques *"studless"*).

Elle est plus particulièrement relative aux bandes de roulement de pneumatiques hiver qui sont spécifiquement adaptés à un roulage sous des conditions dites de "glace fondante" rencontrées dans un domaine de températures typiquement comprises entre -5°C et 0°C. On rappelle en effet que, dans un tel domaine, la pression des pneumatiques au passage d'un véhicule provoque une fusion superficielle de la glace qui se recouvre d'un mince film d'eau nuisible à l'adhérence de ces pneumatiques.

### 2. ETAT DE LA TECHNIQUE

Pour éviter les effets néfastes des clous, notamment leur forte action abrasive sur le revêtement du sol lui-même et un comportement routier notablement dégradé sur sol sec, les manufacturiers de pneumatiques ont proposé différentes solutions consistant à modifier la formulation des compositions de caoutchouc constitutives de leurs bandes de roulement.

Ainsi, il a été proposé tout d'abord d'incorporer des particules solides à grande dureté, telle que par exemple du carbure de silicium (voir par exemple US 3 878 147), dont certaines viennent affleurer la surface de la bande de roulement au fur et à mesure de l'usure de cette dernière, et entrent donc en contact avec la glace. De telles particules, aptes à agir en définitive comme des micro-clous sur de la glace dure, grâce à un effet de "griffe" bien connu, restent relativement agressives vis-à-vis du sol ; elles ne sont pas bien adaptées aux conditions de roulage sur une glace fondante.

D'autres solutions ont donc été proposées, consistant notamment à incorporer des poudres hydrosolubles (i.e., qui peuvent se dissoudre dans l'eau) dans la composition constitutive de la bande de roulement. De telles poudres se solubilisent plus ou moins au contact de la neige ou de la glace fondue, ce qui permet d'une part la création à la surface de la bande de roulement de porosités susceptibles d'améliorer l'accrochage de la bande de roulement sur le sol et d'autre part la création de gorges jouant le rôle de canaux d'évacuation du film liquide créé entre le pneumatique et le sol. A titre d'exemples de telles poudres hydrosolubles, on peut citer par exemple l'emploi de poudre de cellulose, de PVA (alcool polyvinylique) ou d'amidon, ou encore des poudres de gomme de guar ou de gomme de xanthane (voir par exemple demandes de brevet JP 3-159803, JP 2002-211203, EP 940 435, WO 2008/080750, WO 2008/080751).

Dans tous ces exemples, la solubilité à très basse température et dans un temps très court de la poudre utilisée est un facteur essentiel au bon fonctionnement de la bande de roulement. Si la poudre n'est pas soluble dans les conditions d'utilisation du pneumatique, les fonctions précitées (création de microporosités et de canaux d'évacuation de l'eau) ne sont pas remplies et l'adhérence n'est pas améliorée.

L'état de la technique est également constitué par les documents suivants:
- JP 3266705 ne décrit pas l'emploi de poudre de sel métallique hydrosoluble ; seules des fibres de PVA y sont décrites (voir abrégé) ;
- D2 (EP 1621578) décrit des granules de maïs (voir titre, « *corncob granules*») qui de manière bien connue ne sont pas hydrosolubles, qui plus est pas un sel métallique hydrosoluble. D2 ne décrit pas non plus l'emploi de fibres courtes hydrosolubles, a fortiori pas de fibres courtes de PVA (voir examples) ;
- WO 99/41210 décrit des pneumatiques à base d'élastomères, de polymères ou copolymères, dont au moins l'une des parties comprend une association se présentant sous forme sèche, comprenant : des microfibrilles dont le diamètre moyen est inférieur à 0,8 micromètres, et au moins une particule minérale;
- EP 1561605 décrit certes des fibres courtes (revendication 7) de différentes natures mais pas des fibres courtes de PVA. D4 n'utilise pas non plus de poudre de microparticules de sel métallique hydrosoluble ;
- JP 2008-222845 décrit certes l'emploi de sulfate de magnésium (voir abrégé), mais pas des fibres courtes de PVA. D5 ne décrit pas non plus l'emploi d'un fort taux (plus de 30 pce) d'un plastifiant liquide ;
- Quant à EP 896 981, un seul exemple (ex. 9 du tableau III page 10) décrit l'emploi de PVA sous forme de fibre (forme « *f* »). Mais cet exemple ne contient pas de poudre de microparticules de sel métallique hydrosoluble, il utilise en outre un taux très conventionnel de plastifiant liquide (seulement 10 pce d'huile aromatique dans cet exemple 9).

### 3. BREVE DESCRIPTION DE L'INVENTION

Poursuivant leurs recherches, les Demanderesses ont découvert une composition de caoutchouc apte à générer une microrugosité de surface efficace et qui permet d'améliorer fortement l'adhérence sur glace des bandes de roulement et des pneumatiques les comportant, sous conditions de glace fondante.

En conséquence, la présente invention concerne un pneumatique tel qu'énoncé à la revendication 1.

Dans un premier temps, ces microparticules et fibres hydrosolubles, protubérantes à la surface de la bande de roulement, remplissent la fonction de griffe précédemment décrite sans l'inconvénient d'être abrasives. Puis, dans un second temps, après expulsion progressive de la matrice caoutchouteuse, elles libèrent des microcavités qui jouent le rôle de volume de stockage et de canal d'évacuation du film d'eau à la surface de la glace ; dans ces conditions, le contact entre la surface de la bande de roulement et la glace n'est plus lubrifié et le coefficient de friction est ainsi amélioré.

Les pneumatiques de l'invention sont particulièrement destinés à équiper des véhicules à moteur de type tourisme, incluant les véhicules 4x4 (à quatre roues motrices) et véhicules SUV (*"Sport Utility Vehicles"*), des véhicules deux roues (notamment motos) comme des véhicules industriels choisis en particulier parmi camionnettes et "poids-lourd" (i.e., métro, bus, engins de transport routier tels que camions, tracteurs).

L'invention ainsi que ses avantages seront aisément compris à la lumière de la description et des exemples de réalisation qui suivent.

### 4. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

La composition de caoutchouc de la bande de roulement selon l'invention, tout au moins pour la portion (par conséquent sculptée) de bande de roulement qui est destinée à entrer en contact avec la route lors du roulage du pneumatique, est donc à base d'au moins un élastomère diénique, un système plastifiant, une charge renforçante, de microparticules hydrosolubles et de fibres courtes hydrosolubles, composants qui sont décrits en détail ci-après.

### 4.1 - Elastomère diénique

Par élastomère (ou caoutchouc, les deux termes étant synonymes) du type "diénique", on rappelle que doit être entendu un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". Les caoutchoucs butyl, comme par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères (tels que SBR, BR, NR ou IR) du type époxydés.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon ASTM D3418-82) de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Selon un mode de réalisation particulièrement préférentiel de l'invention, l'élastomère diénique est choisi dans le groupe constitué par le caoutchouc naturel, les polyisoprènes de synthèse, les polybutadiènes ayant un taux de liaisons cis-1,4 supérieur à 90%, les copolymères de butadiène-styrène et les mélanges de ces élastomères.

Selon un mode de réalisation plus particulier et préférentiel, la composition de caoutchouc comporte 50 à 100 pce de caoutchouc naturel ou de polyisoprène de synthèse, ledit caoutchouc naturel ou le polyisoprène de synthèse pouvant être utilisé notamment en coupage (mélange) avec au plus 50 pce d'un polybutadiène ayant un taux de liaisons cis-1,4 supérieur à 90%.

Selon un autre mode de réalisation particulier et préférentiel, la composition de caoutchouc comporte 50 à 100 pce d'un polybutadiène ayant un taux de liaisons cis-1,4 supérieur à 90%, ledit polybutadiène pouvant être utilisé notamment en coupage avec au plus 50 pce de caoutchouc naturel ou un polyisoprène de synthèse.

Aux élastomères diéniques des bandes de roulement selon l'invention pourraient être associés, en quantité minoritaire, des élastomères synthétiques autre que diéniques, voire des polymères autres que des élastomères, par exemple des polymères thermoplastiques.

### 4.2 - Système plastifiant

La composition de caoutchouc selon l'invention a pour autre caractéristique essentielle de comporter au moins 30 pce d'un agent plastifiant liquide (à 20°C) dont la fonction est de ramollir la matrice en diluant l'élastomère et la charge renforçante ; sa Tg est par définition inférieure à -20°C, de préférence inférieure à -40°C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les plastifiants liquides choisis dans le groupe constitué par les huiles naphténiques (à basse ou haute viscosité, notamment hydrogénées ou non), les huiles paraffiniques, les huiles MES (*Médium Extracted Solvates),* les huiles TDAE (*Treated Distillate Aromatic Extracts),* les huiles minérales, les huiles végétales, les plastifiants éthers, les plastifiants esters, les plastifiants phosphates, les plastifiants sulfonates et les mélanges de ces composés.

A titre de plastifiants phosphates par exemple, on peut citer ceux qui contiennent entre 12 et 30 atomes de carbone, par exemple le trioctyle phosphate. A titre d'exemples de plastifiants esters, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Le taux de plastifiant liquide dans la composition selon l'invention est de préférence supérieur à 40 pce, plus préférentiellement compris dans un domaine de 50 à 100 pce.

Selon un autre mode de réalisation préférentiel, les compositions selon l'invention peuvent comporter aussi, à titre de plastifiant solide (à 20°C), une résine hydrocarbonée présentant une Tg supérieur à +20°C, de préférence supérieure à +30°C, telles que décrites par exemple dans les demandes WO 2005/087859, WO 2006/061064 et WO 2007/017060.

Les résines hydrocarbonées sont des polymères bien connus de l'homme du métier, essentiellement à base de carbone et hydrogène, miscibles donc par nature dans les compositions d'élastomère(s) diénique(s) lorsqu'elles sont qualifiées en outre de "plastifiantes". Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "*Rubber Tires and Mechanicad Goods"*). Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :
- une Tg supérieure à 20°C (plus préférentiellement entre 40 et 100°C) ;
- une masse moléculaire moyenne en nombre (Mn) comprise entre 400 et 2000 g/mol (plus préférentiellement entre 500 et 1500 g/mol) ;
- un indice de polymolécularité (Ip) inférieur à 3, plus préférentiellement inférieur à 2 (rappel : Ip = Mw/Mn avec Mw masse moléculaire moyenne en poids).

La Tg est mesurée de manière connue par DSC *(Differential Scanning Calorimetry*), selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère terpène, les résines d'homopolymère ou copolymère de coupe C5, les résines d'homopolymère ou copolymère de coupe C9, et les mélanges de ces résines. Parmi les résines de copolymères ci-dessus sont plus préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, les résines de copolymère coupe C9/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha- méthylstyrène, l'ortho-, méta-, para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le composé vinyle-aromatique est du styrène ou un monomère vinylaromatique issu d'une coupe C₉ (ou plus généralement d'une coupe Cs à C₁₀). De préférence, le composé vinylaromatique est le monomère minoritaire, exprimé en fraction molaire, dans le copolymère considéré.

Le taux de résine hydrocarbonée est préférentiellement compris entre 3 et 60 pce, plus préférentiellement entre 3 et 40 pce, notamment entre 5 et 30 pce.

Le taux d'agent plastifiant total (i.e., plastifiant liquide plus, le cas échéant, résine hydrocarbonée solide) est de préférence compris entre 40 et 100 pce, plus préférentiellement compris dans un domaine de 50 à 80 pce.

### 4.3 - Charge

On peut utiliser tout type de charge renforçante connue pour ses capacités à renforcer une composition de caoutchouc utilisable pour la fabrication de pneumatiques, par exemple une charge organique telle que du noir de carbone, ou encore une charge inorganique renforçante telle que de la silice à laquelle est associé de manière connue un agent de couplage.

Une telle charge renforçante consiste typiquement en des nanoparticules dont la taille moyenne (en masse) est inférieure à 500 nm, le plus souvent comprise entre 20 et 200 nm, en particulier et préférentiellement entre 20 et 150 nm.

Comme noirs de carbone conviennent tous les noirs de carbone, notamment les noirs conventionnellement utilisés dans les pneumatiques ou bandes de roulement des pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375. Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice (SiO₂ ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber. Comme exemples d'alumines renforçantes, on peut citer les alumines "Baikalox" "A125" ou "CR125" de la société Baïkowski, "APA-100RDX" de Condea, "Aluminoxid C" de Degussa ou "AKP-G015" de Sumitomo Chemicals.

De manière préférentielle, le taux de charge renforçante totale (noir de carbone et/ou charge inorganique renforçante) est compris entre 60 et 120 pce, notamment entre 70 et 100 pce.

Selon un mode de réalisation particulier, la charge comporte de la silice, du noir de carbone ou un mélange de noir de carbone et de silice.

Selon un autre mode de réalisation particulier, la charge renforçante comprend du noir de carbone à titre majoritaire ; dans un tel cas, le noir de carbone est présent à un taux préférentiellement supérieur à 60 pce, associé ou non à une charge inorganique renforçante telle que silice en quantité minoritaire.

Selon un autre mode de réalisation particulier, la charge renforçante comprend une charge inorganique, notamment de la silice, à titre majoritaire ; dans un tel cas, la charge inorganique, notamment silice, est présente à un taux préférentiellement supérieur à 70 pce, associée ou non à du noir de carbone en quantité minoritaire ; le noir de carbone, lorsqu'il est présent, est utilisé de préférence à un taux inférieur à 20 pce, plus préférentiellement inférieur à 10 pce (par exemple entre 0,1 et 10 pce).

Indépendamment de l'aspect premier de l'invention, à savoir la recherche d'une adhérence optimisée sur glace fondante, l'emploi à titre majoritaire d'une charge inorganique renforçante telle que silice est également avantageux du point de vue de l'adhérence sur sol mouillé ou enneigé.

Selon un autre mode de réalisation possible de l'invention, la charge renforçante comprend un coupage de noir de carbone et de charge inorganique renforçante telle que silice en des quantités voisines ; dans un tel cas, le taux de charge inorganique, notamment silice, et le taux de noir de carbone sont de préférence chacun compris entre 25 et 75 pce, plus particulièrement chacun compris entre 30 et 50 pce.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (I) suivante:

(I) Z - A - Sₓ - A - Z ,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁₋C₁₀, notamment en C₁-C₄, en particulier le propylène) ;
- Z répond à l'une des formules ci-après: 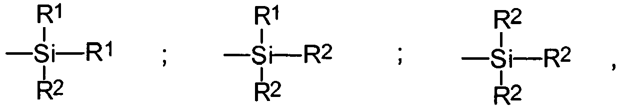 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

A titre d'exemples de silanes polysulfurés, on citera plus particulièrement les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, ou le disulfure de bis-(triéthoxysilylpropyle), en abrégé TESPD. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule (I) ci-dessus) tels que décrits dans les demandes de brevet WO 02/30939 (ou US 6,774,255) et WO 02/3104] (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc selon l'invention, la teneur en agent de couplage est préférentiellement comprise entre 2 et 12 pce, plus préférentiellement entre 3 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### 4.4 - Microparticules hydrosolubles

La composition de caoutchouc selon l'invention a pour caractéristique essentielle de comporter entre 2 et 50 pce de poudre de microparticules hydrosolubles.

Par microparticules, on entend par définition et de manière générale des particules de taille (i.e., plus grande dimension dans le cas de particules anisométriques) micrométrique, c'est-à-dire dont la taille moyenne ou la taille médiane (toutes deux exprimées en poids) sont comprises entre 1 µm et 1 mm. De préférence, la taille médiane est comprise entre 2 µm et 800 µm, plus préférentiellement comprise dans un domaine de 5 à 200 µm.

En dessous des minima indiqués ci-dessus, l'effet technique visé (à savoir la création d'une microrugosité adaptée) risque d'être insuffisant alors qu'au delà des maxima indiqués, on s'expose à différents inconvénients, en particulier lorsque la composition de caoutchouc est utilisée comme bande de roulement : outre une perte d'esthétique possible (particules trop visibles à la surface de la bande de roulement) et un risque de décohésion, lors du roulage, d'éléments de sculpture de taille relativement importante, on a constaté que la performance d'adhérence sur glace fondante pouvait être dégradée.

Pour toutes ces raisons, on préfère que les microparticles aient une taille médiane comprise entre 2 µm et 500 µm, plus préférentiellement encore comprise dans un domaine de 5 à 200 µm. Ce domaine de taille particulièrement préférentiel semble correspondre à un compromis optimisé entre d'une part la rugosité de surface recherchée et d'autre part un bon contact entre la composition de caoutchouc et la glace.

D'autre part, pour des raisons identiques à celles exposées ci-dessus, le taux de microparticules est de préférence compris entre 5 et 40 pce, plus préférentiellement compris entre 10 et 35 pce.

Les microparticules hydrosolubles sont des microparticules de sels métalliques, ces sels étant choisis dans le groupe constitué par les chlorures, les carbonates (incluant notamment les hydroxycarbonates, les bicarbonates), les sulfates et les mélanges de tels sels. Plus préférentiellement encore, le sel choisi est un sulfate.

Le métal du sel métallique hydrosoluble est choisi dans le groupe constitué par Na (sodium), K (potassium), Mg (magnésium), Ca (calcium) et les mélanges de tels métaux. Plus préférentiellement encore, le métal est le magnésium.

Pour l'analyse de la granulométrie et le calcul de la taille médiane des microparticules (ou diamètre médian pour des microparticules supposées sensiblement sphériques), différentes méthodes connues sont applicables, par exemple par diffraction laser (voir par exemple norme ISO-8130-13).

On peut aussi utiliser de manière simple et préférentielle une analyse de la granulométrie par un tamisage mécanique ; l'opération consiste a tamiser une quantité définie d'échantillon (par exemple 200 g) sur une table vibrante pendant 30 min avec des diamètres de tamis différents (par exemple, selon une raison de progression égale à 1,26, avec des mailles de 1000, 800, 630, 500, 400, ... 100, 80, 63 µm) ; les refus récoltés sur chaque tamis sont pesés sur une balance de précision ; on en déduit le % de refus pour chaque diamètre de maille par rapport au poids total de produit ; la taille médiane (ou diamètre médian) ou moyenne (ou diamètre moyen) est finalement calculée de manière connue à partir de l'histogramme de la distribution granulométrique.

### 4.5 - Fibres courtes de PVA

Les compositions de caoutchouc selon l'invention ont pour autre caractéristique essentielle de comporter entre 2 et 50 pce, de préférence entre 5 et 20 pce, de fibres courtes d'alcool de polyvinyle (PVA).

Par fibres courtes, on entend des fibres non continues, dont la longueur est supérieure à 1 mm et inférieure à 30 mm, notamment comprise dans un domaine de 2 à 15 mm, en particulier dans un domaine de 4 à 12 mm.

De préférence, ces fibres courtes sont des fibres monofilamentaires ou multifilamentaires dont les filaments élémentaires ont un diamètre moyen (en nombre) qui est compris entre 5 et 50 µm, de préférence entre 10 et 30 µm, en particulier entre 15 et 25 µm.

### 4.6 - Additifs divers

Les compositions de caoutchouc selon l'invention comportent également tout ou partie des additifs usuels habituellement utilisés dans les compositions d'élastomères destinées à la fabrication de bandes de roulement pour pneumatiques, notamment pour pneumatiques hiver, comme par exemple des agents de protection tels que cires anti-ozone, anti-ozonants chimiques, anti-oxydants, des résines renforçantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

Ces compositions peuvent également contenir des activateurs de couplage lorsque qu'un agent de couplage est utilisé, des agents de recouvrement de la charge inorganique ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru ; ces agents sont par exemple des silanes hydrolysables tels que des alkyl-alkoxysilanes, des polyols, des polyéthers, des aminés, des polyorganosiloxanes hydroxylés ou hydrolysables.

### 4.7 - Fabrication des compositions de caoutchouc et des bandes de roulement

Les compositions de caoutchouc selon l'invention sont fabriquées dans des mélangeurs appropriés, en utilisant deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Un procédé utilisable pour la fabrication de telles compositions comporte par exemple et de préférence les étapes suivantes :
- incorporer à l'élastomère diénique, dans un mélangeur, plus de 30 pce d'un plastifiant liquide à 20°C, entre 50 et 150 pce d'une charge renforçante, entre 2 et 50 pce de poudre des microparticules de sel métallique hydrosoluble et entre 2 et 50 pce de fibres courtes de PVA (alcool de polyvinyle) dont la longueur est supérieur à 1 mm et inférieure à 30 mm, en malaxant thermomécaniquement le tout, en une ou plusieurs fois, jusqu'à atteindre une température maximale comprise entre 130°C et 200°C (pce signifiant parties en poids pour cent parties d'élastomère);
- refroidir l'ensemble à une température inférieure à 100°C ;
- incorporer ensuite un système de réticulation ;
- malaxer le tout jusqu'à une température maximale inférieure à 120°C ;
- extruder ou calandrer la composition de caoutchouc ainsi obtenue, notamment sous la forme d'une bande de roulement de pneumatique.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de réticulation. Après refroidissement du mélange ainsi obtenu au cours de la première phase non-productive, on incorpore alors le système de réticulation à basse température, généralement dans un mélangeur externe tel qu'un mélangeur à cylindres ; le tout est alors mélangé (phase productive) pendant quelques minutes, par exemple entre 5 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont plus préférentiellement choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable directement comme bande de roulement de pneumatique hiver.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

Dans le cas d'une bande de roulement de type composite formée de plusieurs compositions de caoutchouc de formulations différentes, les compositions de caoutchouc selon l'invention précédemment décrites peuvent constituer une partie seulement de la bande de roulement conforme à l'invention, tout au moins pour la portion (par conséquent sculptée) de la bande de roulement destinée à entrer en contact avec la route lors du roulage du pneumatique.

L'invention concerne les pneumatiques précédemment décrits tant à l'état cru (i.e., avant cuisson) qu'à l'état cuit (i.e., après réticulation ou vulcanisation).

### 5. EXEMPLES DE REALISATION DE L'INVENTION

### 5.1 - Préparation des compositions de caoutchouc

Dans ces essais, on compare trois compositions (notées C-1, C-2 et C-3) à base d'élastomères diéniques (coupage NR et BR à taux de liaisons cis-1,4 supérieur à 95%), renforcées par un coupage de silice et de noir de carbone auxquels sont associés ou non 30 pce de poudre de microparticules de sulfate de magnésium d'une part, et 8 pce de fibres de PVA hydrosolubles d'autre part. Le tableau 1 donne la formulation des trois compositions (taux des différents produits exprimés en pce).

Pour la fabrication des ces compositions, on a procédé de la manière suivante: on introduit dans un mélangeur interne, dont la température initiale de cuve est d'environ 60°C, successivement la charge renforçante (noir de carbone, silice et son agent de couplage associé), le plastifiant liquide, des microparticules de sulfate de magnésium, des fibres courtes hydrosolubles de PVA, l'élastomère diénique (ou coupage d'élastomères diéniques) ainsi que les divers autres ingrédients à l'exception du système de vulcanisation ; le mélangeur est ainsi rempli à environ 70% (% en volume). On conduit alors un travail thermomécanique (phase non-productive) en une étape, qui dure au total environ 3 à 4 minutes, jusqu'à atteindre une température maximale de "tombée" de 165°C. On récupère le mélange ainsi obtenu, on le refroidit puis on incorpore du soufre et un accélérateur type sulfénamide sur un mélangeur externe (homo-finisseur) à 30°C, en mélangeant le tout (phase productive) pendant un temps approprié (par exemple entre 5 et 12 min).

### 5.2 - Tests de friction sur glace

Ces trois compositions sont ensuite soumises à un test laboratoire consistant à mesurer leur coefficient de friction sur glace.

Le principe repose sur un patin de composition de caoutchouc glissant à une vitesse donnée (par exemple 5 km/h) sur une piste de glace avec une charge imposée (par exemple égale à 3 kg/cm²). Préalablement au test, la surface du patin à tester est rodée par rabotage sur une épaisseur de 0,5 mm, suivi d'une série de frottements par glissement répété sur un sol sec réel (asphalte) sous la dite charge imposée (par exemple 3 kg/cm²). Les forces générées dans le sens de l'avancement (Fx) du patin et perpendiculaire à l'avancement (Fz) sont mesurées. Le rapport Fx/Fz détermine le coefficient de friction de l'éprouvette sur la glace. La température pendant la mesure est fixée a -2 C.

Ce test dont le principe est bien connu de l'homme du métier (voir par exemple demandes de brevet EP 1052270 et EP 1505112) permet d'évaluer dans des conditions représentatives l'adhérence sur glace fondante qui serait obtenue après un essai de roulage sur véhicule équipé de pneumatiques dont la bande de roulement est constituée des mêmes compositions de caoutchouc.

Les résultats sont exprimés dans le tableau 2. Une valeur supérieure à celle du témoin (composition C-1), arbitrairement fixée à 100, indique un résultat amélioré c'est-à-dire une aptitude à une distance de freinage plus courte.

On constate que seule la composition C-3 selon l'invention présente une augmentation très nette (plus de 40%) du coefficient de friction sur glace, par rapport à la composition témoin C-1, tandis que cette augmentation est inférieure à 10% sur la composition C-2 (non conforme à l'invention) comportant certes des microparticules hydrosolubles mais dépourvues de fibres courtes hydrosolubles.

En conclusion, les compositions selon l'invention offrent aux pneumatiques et à leurs bandes de roulement une adhérence sur glace fondante qui est fortement améliorée.

**Tableau 1**

| Composition N°: | C-1 | C-2 | C-3 |
|---|---|---|---|
| BR (1) | 60 | 60 | 60 |
| NR (2) | 40 | 40 | 40 |
| silice (3) | 80 | 80 | 80 |
| agent de couplage (4) | 6.5 | 6.5 | 6.5 |
| noir de carbone (5) | 4 | 4 | 4 |
| microparticules hydrosolubles (6) | - | 30 | 30 |
| fibres courtes hydrosolubles (7) | - | - | 8 |
| huile non aromatique (8) | 60 | 60 | 60 |
| DPG (9) | 1.5 | 1.5 | 1.5 |
| ZnO | 1.2 | 1.2 | 1.2 |
| acide stéarique | 1 | 1 | 1 |
| cire anti-ozone | 1.5 | 1.5 | 1.5 |
| antioxydant (10) | 2 | 2 | 2 |
| soufre | 2 | 2 | 2 |
| accélérateur (11) | 1.7 | 1.7 | 1.7 |

| | | | |
|---|---|---|---|
| (1) BR avec 4,3% de 1-2 ; 2,7% de trans ; 97% de cis 1-4 (Tg = -104°C) ; (2) Caoutchouc naturel (peptisé) ; (3) silice "Zeosil 1115MP" de la société Rhodia, type "HDS" (BET et CTAB : environ 120 m²/g); (4) agent de couplage TESPT ("Si69" de la société Degussa) ; (5) grade ASTM N234 (société Cabot) ; (6) poudre de sulfate de magnésium (société Aldrich ; taille médiane des particules : environ 100 µm) ; (7) fibres courtes de PVA (société Kuraray ; longueur moyenne environ 10 mm) ; (8) huile MES ("Catenex SNR" de Shell) ; (9) diphénylguanidine (Perkacit DPG de la société Flexsys) ; (10) N-1,3-diméthylbutyl-N-phénylparaphénylènediamine (Santoflex 6-PPD de la société Flexsys); (11) N-dicyclohexyl-2-benzothiazol-sulfénamide ("Santocure CBS" de la société Flexsys). | | | |

**Tableau 2**

| Composition de caoutchouc °: | C-1 | C-2 | C-3 |
|---|---|---|---|
| Test de friction sur glace (-2°C) : | 100 | 108 | 142 |

## Revendications

1. Pneumatique dont la bande de roulement comporte une composition de caoutchouc comprenant au moins (pce signifiant parties en poids pour cent parties d'élastomère) un élastomère diénique, plus de 30 pce d'un plastifiant liquide à 20°C, entre 50 et 150 pce d'une charge renforçante, **caractérisée en ce qu'**elle comporte en outre entre 2 et 50 pce de poudre de microparticules de sel métallique hydrosoluble dont la taille médiane en poids mesurée par diffraction laser selon la nonne ISO-8130-13 est comprise entre 1 µm et 1 mm, et entre 2 et 50 pce de fibres courtes de PVA (alcool de polyvinyle) dont la longueur est supérieur à 1 mm et inférieure à 30 mm, le sel métallique hydrosoluble étant choisi dans le groupe constitué par les chlorures, les carbonates, les sulfates et les mélanges de tels sels, et le métal du sel métallique hydrosoluble étant choisi parmi Na, K, Mg, Ca et les mélanges de tels métaux.

2. Pneumatique selon la revendication 1, dans lequel l'élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

3. Pneumatique selon la revendication 2, ladite composition comportant 50 à 100 pce de caoutchouc naturel ou de polyisoprène de synthèse, de préférence en coupage avec au plus 50 pce d'un polybutadiène ayant un taux de liaisons cis-1,4 supérieur à 90%.

4. Pneumatique selon la revendication 2, ladite composition comportant 50 à 100 pce d'un polybutadiène ayant un taux de liaisons cis-1,4 supérieur à 90%.

5. Pneumatique selon l'une quelconque des revendications 1 à 4, dans lequel le taux de plastifiant liquide est supérieur à 40 pce.

6. Pneumatique selon l'une quelconque des revendications 1 à 5, dans lequel le plastifiant liquide est choisi dans le groupe constitué par les huiles naphténiques, les huiles paraffiniques, les huiles MES, les huiles TDAE, les huiles minérales, les huiles végétales, les plastifiants éthers, les plastifiants esters, les plastifiants phosphates, les plastifiants sulfonates et les mélanges de ces composés.

7. Pneumatique selon l'une quelconque des revendications 1 à 6, dans lequel la charge renforçante comprend à titre majoritaire du noir de carbone.

8. Pneumatique selon l'une quelconque des revendications 1 à 6, dans lequel la charge renforçante comprend à titre majoritaire une charge inorganique renforçante.

9. Pneumatique selon l'une quelconque des revendications 1 à 8, dans lequel le taux de charge renforçante totale est compris entre 60 et 120 pce.

10. Pneumatique selon l'une quelconque des revendications 1 à 9, dans lequel le sel métallique hydrosoluble est du sulfate de magnésium.

11. Pneumatique selon l'une quelconque des revendications 1 à 10, dans lequel les microparticules ont une taille médiane en poids comprise entre 2 et 500 µm.

12. Pneumatique selon l'une quelconque des revendications 1 à 11, ladite composition comportant entre 5 et 40 pce de microparticules de sel métallique hydrosoluble et entre 5 et 40 pce de fibres courtes de PVA.

## Patentansprüche

1. Reifen, dessen Lauffläche eine Kautschukzusammensetzung umfasst, die mindestens (wobei phe Gewichtsteile pro hundert Teile Elastomer bedeutet) ein Dienelastomer, mehr als 30 phe eines bei 20°C flüssigen Weichmachers und zwischen 50 und 150 phe eines verstärkenden Füllstoffs umfasst, **dadurch gekennzeichnet, dass** sie außerdem zwischen 2 und 50 phe Pulver von Mikroteilchen aus wasserlöslichem Metallsalz mit einer durch Laserbeugung gemäß der Norm ISO-8130-13 gemessenen gewichtsmittleren Teilchengröße zwischen 1 µm und 1 mm und zwischen 2 und 50 phe PVA(Polyvinylalkohol)-Kurzfasern mit einer Länge von mehr als 1 mm und weniger als 30 mm umfasst, wobei das wasserlösliche Metallsalz aus der Gruppe bestehend aus Chloriden, Carbonaten, Sulfaten und Mischungen derartiger Salze ausgewählt ist und das Metall des wasserlöslichen Metallsalzes aus Na, K, Mg, Ca und Mischungen derartiger Metalle ausgewählt ist.

2. Reifen nach Anspruch 1, wobei das Dienelastomer aus der Gruppe bestehend aus Naturkautschuk, synthetischen Polyisoprenen, Polybutadienen, Butadien-Copolymeren, Isopren-Copolymeren und Mischungen dieser Elastomere ausgewählt ist.

3. Reifen nach Anspruch 2, wobei die Zusammensetzung 50 bis 100 phe Naturkautschuk oder synthetisches Polyisopren, vorzugsweise als Verschnitt mit höchstens 50 phe eines Polybutadiens mit einem Gehalt an cis-1,4-Bindungen von mehr als 90%, umfasst.

4. Reifen nach Anspruch 2, wobei die Zusammensetzung 50 bis 100 phe eines Polybutadiens mit einem Gehalt an cis-1,4-Bindungen von mehr als 90% umfasst.

5. Reifen nach einem der Ansprüche 1 bis 4, wobei der Gehalt an flüssigem Weichmacher mehr als 40 phe beträgt.

6. Reifen nach einem der Ansprüche 1 bis 5, wobei der flüssige Weichmacher aus der Gruppe bestehend aus naphthenischen Ölen, Paraffinölen, MES-Ölen, TDAE-Ölen, Mineralölen, Pflanzenölen, Ether-Weichmachern, Ester-Weichmachern, Phosphat-Weichmachern, Sulfonat-Weichmachern und Mischungen dieser Verbindungen ausgewählt ist.

7. Reifen nach einem der Ansprüche 1 bis 6, wobei der verstärkende Füllstoff mehrheitlich Ruß umfasst.

8. Reifen nach einem der Ansprüche 1 bis 6, wobei der verstärkende Füllstoff mehrheitlich einen verstärkenden anorganischen Füllstoff umfasst.

9. Reifen nach einem der Ansprüche 1 bis 8, wobei der Gesamtgehalt an verstärkendem Füllstoff zwischen 60 und 120 phe liegt.

10. Reifen nach einem der Ansprüche 1 bis 9, wobei es sich bei dem wasserlöslichen Metallsalz um Magnesiumsulfat handelt.

11. Reifen nach einem der Ansprüche 1 bis 10, wobei die Mikroteilchen eine gewichtsmittlere Größe zwischen 2 und 500 µm aufweisen.

12. Reifen nach einem der Ansprüche 1 bis 11, wobei die Zusammensetzung zwischen 5 und 40 phe Mikroteilchen aus wasserlöslichem Metallsalz und zwischen 5 und 40 phe PVA-Kurzfasern umfasst.

## Claims

1. Tyre, the tread of which comprises a rubber composition comprising at least (phr meaning parts by weight per hundred parts of elastomer) a diene elastomer, more than 30 phr of a plasticizer liquid at 20°C, between 50 and 150 phr of a reinforcing filler, **characterized in that** it further comprises between 2 and 50 phr of powder formed of water-soluble metal salt microparticles, the median size by weight of which, measured by laser diffraction according to Standard ISO-8130-13, is between 1 µm and 1 mm, and between 2 and 50 phr of short PVA (polyvinyl alcohol) fibres, the length of which is greater than 1 mm and less than 30 mm, the water-soluble metal salt being chosen from the group consisting of chlorides, carbonates, sulphates and the mixtures of such salts, and the metal of the water-soluble metal salt being chosen from Na, K, Mg, Ca and the mixtures of such metals.

2. Tyre according to Claim 1, in which the diene elastomer is chosen from the group consisting of natural rubber, synthetic polyisoprenes, polybutadienes, butadiene copolymers, isoprene copolymers and the mixtures of these elastomers.

3. Tyre according to Claim 2, the said composition comprising from 50 to 100 phr of natural rubber or synthetic polyisoprene, preferably as a blend with at most 50 phr of a polybutadiene having a content of cis-1,4 bonds of greater than 90%.

4. Tyre according to Claim 2, the said composition comprising from 50 to 100 phr of a polybutadiene having a content of cis-1,4 bonds of greater than 90%.

5. Tyre according to any one of Claims 1 to 4, in which the content of liquid plasticizer is greater than 40 phr.

6. Tyre according to any one of Claims 1 to 5, in which the liquid plasticizer is chosen from the group consisting of naphthenic oils, paraffinic oils, MES oils, TDAE oils, mineral oils, vegetable oils, ether plasticizers, ester plasticizers, phosphate plasticizers, sulphonate plasticizers and the mixtures of these compounds.

7. Tyre according to any one of Claims 1 to 6, in which the reinforcing filler predominantly comprises carbon black.

8. Tyre according to any one of Claims 1 to 6, in which the reinforcing filler predominantly comprises a reinforcing inorganic filler.

9. Tyre according to any one of Claims 1 to 8, in which the content of total reinforcing filler is between 60 and 120 phr.

10. Tyre according to any one of Claims 1 to 9, in which the water-soluble metal salt is magnesium sulphate.

11. Tyre according to any one of Claims 1 to 10, in which the microparticles have a median size by weight of between 2 and 500 µm.

12. Tyre according to any one of Claims 1 to 11, the said composition comprising between 5 and 40 phr of water-soluble metal salt microparticles and between 5 and 40 phr of short PVA fibres.
